# EUROPÄISCHE PATENTSCHRIFT

(11) **EP 2 768 650 B1**
(45) Veröffentlichungstag und Bekanntmachung des Hinweises auf die Patenterteilung: **08.05.2019**
(21) Anmeldenummer: 12775497.6
(22) Anmeldetag: 19.10.2012
(51) Int. Cl.: B29C 44/12, B29C 44/58, F16L 59/14, B29K 75/00, B29L 23/00

(54) **VERFAHREN ZUR VERBESSERUNG DER PHYSIKALISCHEN EIGENSCHAFTEN BEI DER HERSTELLUNG VON KUNSTSTOFFMANTELROHREN**
METHOD FOR IMPROVING PHYSICAL PROPERTIES IN THE MANUFACTURE OF PIPES PREINSULATED WITH PLASTIC
PROCÉDÉ POUR AMÉLIORER LES PROPRIÉTÉS PHYSIQUES LORS DE LA FABRICATION DE TUBE DE GAINAGE EN PLASTIQUE

(30) Priorität: 21.10.2011 EP 11186136
(43) Veröffentlichungstag der Anmeldung: 27.08.2014
(73) Patentinhaber: BASF SE, 67056 Ludwigshafen am Rhein (DE)
(72) Erfinder: ELLERSIEK, Carsten, 49525 Lengerich (DE)
(74) Vertreter: BASF IP Association
(86) Internationale Anmeldenummer: PCT/EP2012/070710
(87) Internationale Veröffentlichungsnummer: WO 2013/057227

(56) Entgegenhaltungen:
- EP-A2- 1 783 152
- DE-A1- 19 938 140
- FR-A1- 2 634 157
- GB-A- 1 291 135
- US-A- 3 949 461

## Beschreibung

Die vorliegende Erfindung betrifft ein Verfahren zur Herstellung von gedämmten Rohren, gemäß Anspruch 1.

Des Weiteren betrifft die vorliegende Erfindung die Verwendung einer Kappe mit in der Größe verstellbaren Öffnungen zur Herstellung von gedämmten Rohren, gemäß Anspruch 8. Mit Polyurethanschaumstoffen gedämmte Rohre sind im Stand der Technik bekannt und beispielsweise in EP-A-865 893 und DE-A-197 42 012 beschrieben. Gedämmte Rohrleitungssysteme werden aus einzelnen Rohrsegmenten zusammengefügt. Standardmäßig werden hierfür Rohrlängen von 6 m, 12 m und 16 m verwendet. Benötigte Überhanglängen werden speziell gefertigt oder aus bestehender Konfektionsware zugeschnitten. Die einzelnen Rohrsegmente werden verschweißt und mit bestehender Muffentechnik im Bereich der Schweißnaht nachgedämmt. Diese Muffenverbindungen bergen ein größeres Schadenspotential als die Rohrware selbst. Dieser Unterschied resultiert aus der Tatsache, dass die Rohrlängen unter festgelegten, kontrollierbaren Bedingungen in Produktionshallen hergestellt werden. Die Muffenverbindungen werden oft unter Zeitdruck bei Wind und Wetter vor Ort auf der Baustelle hergestellt. Einflüsse wie Temperatur, Verschmutzungen und Feuchtigkeit beeinflussen oft die Qualität der Muffenverbindungen. Weiterhin stellt die Zahl der Muffenverbindungen einen großen Kostenfaktor bei der Installation von Rohrleitungssystemen dar.

In der rohrverarbeitenden Industrie ist es daher erstrebenswert, möglichst wenige Muffenverbindungen, bezogen auf die Länge einer Leitung, zu installieren. Dies wird erreicht durch den Einsatz von längeren Einzelrohrsegmenten, deren Produktion allerdings erhöhte Anforderungen stellt und häufig zu technischen Problemen führt.

Der größte Teil der Einzelrohre wird mit Hilfe der diskontinuierlichen Rohr-in-Rohr Produktion hergestellt. Im Rahmen dieses Verfahrens wird das Mediumrohr, im Allgemeinen aus Stahl, mit sternförmigen Abstandshaltern versehen, die der Zentrierung des inneren Rohres dienen. Das Mediumrohr wird in das äußere Mantelrohr, im Allgemeinen aus Polyethylen, geschoben, so dass sich ein Ringspalt zwischen beiden Rohren ergibt. Dieser Ringspalt wird mit Polyurethanschaum gefüllt, da dieser hervorragende Dämmeigenschaften aufweist. Hierfür wird das leicht geneigte Doppelrohr mit Abschlusskappen versehen, die mit statischen Entlüftungslöchern ausgestattet sind. Anschließend wird in den Ringspalt mittels einer Polyurethandosiermaschine das flüssige Reaktionsgemisch eingefüllt, welches in noch flüssiger Form im Rohrspalt hinunter fließt bis die Reaktion einsetzt. Ab diesem Zeitpunkt findet die weitere Verteilung durch Fließen des langsam in der Viskosität ansteigenden Schaums statt, bis das Material ausreagiert ist.

In der EP 1 552 915 A2 wird ein Verfahren zur Herstellung von gedämmten Rohren offenbart, wobei ein Polyurethansystem enthaltend eine Isocyanatkomponente und eine Polyolkomponente mit einer niedrigen Viskosität von kleiner 3000 mPas in den Ringspalt aus Mediumrohr und Mantelrohr eingefüllt wird. Nach dem Einfüllen schäumt das Polyurethansystem auf und härtet gleichzeitig aus. Als Katalysatoren für die Polyurethanbildung werden Amine wie Triethylamin oder 1,4-Diaza-bicyclo-(2,2,2)-octan eingesetzt.

Die EP 1 783 152 A2 offenbart ebenfalls ein Verfahren zur Herstellung von gedämmten Rohren, wobei ein Polyurethansystem enthaltend eine Isocyanatkomponente und eine Polyolkomponente mit besonders niedriger Viskosität von weniger als 1300 mPas in den Ringspalt aus Mediumrohr und Mantelrohr eingefüllt wird. Auch dieses Dokument nennt als geeignete Katalysatoren Amine wie Triethylamin oder 1,4-Diaza-bicyclo-(2,2,2)-octan.

In den Schriften EP 1 552 915 A2 und EP 1 783 152 A2 werden demnach Verfahren beschrieben, um gedämmte Rohre herzustellen, in denen das Problem einer vollständigen Befüllung des Rohres vor Aufschäumen und Aushärten dadurch gelöst wird, dass Polyolkomponenten mit besonders geringer Viskosität und damit einer guten Fließfähigkeit eingesetzt werden.

Eine gute Ausrichtung der Zellen im Polyurethanschaum (Zellorientierung) ist verantwortlich für eine gute Druckfestigkeit. Die für gedämmte Rohre notwendigen Festigkeiten erreicht man im Allgemeinen durch ein entsprechendes, hohes Raumgewicht. Ein solches hohes Raumgewicht wird im Allgemeinen erreicht, indem viel Polyurethanschaum in den Ringspalt gefüllt wird. Durch die aus dem Stand der Technik bekannten Verfahren ist es nicht möglich, eine gute Zellorientierung mit einem niedrigeren Raumgewicht zu erreichen. Ein hohes Raumgewicht wirkt sich auch negativ auf die Wärmeleitfähigkeit des Polyurethanschaumes aus und ist daher zu vermeiden.

Weiterhin ist für die Qualität der Rohre eine gleichmäßige Rohdichteverteilung des Schaumstoffes wichtig. Diese ist jedoch bei Einsatz der aus dem Stand der Technik bekannten Verfahren nicht vorteilhaft. Gewöhnlich ergibt sich an den Enden eine niedrigere und in der Mitte des Rohres eine höhere Rohdichte. Je länger das Rohr ist, desto höher wird produktionstechnisch bedingt die erforderliche Gesamtrohdichte des Schaums im Rohrspalt.

Des Weiteren ist es bei der Produktion entsprechender Rohre problematisch, die Druckverhältnisse im Inneren des Rohrspaltes während des Einfüllens des Polyurethansystems zu kontrollieren. Werden die zu befüllenden Rohrspalte mit Kappen mit statischen, d. h. nicht verstellbaren, Öffnungen eingesetzt, können die sich während des Einfüllens des Polyurethansystems ändernden Druckverhältnisse nicht korrigiert bzw. beeinflusst werden.

Aufgabe der Erfindung war es ein Verfahren zur Herstellung von gedämmten Rohren bereitzustellen, wobei Rohre erhalten werden, die sich durch eine niedrige und gleichmäßig verteilte Kernrohdichte, sowie kleine Zelldurchmesser des enthaltenen Polyurethan-Schaumstoffs und damit durch eine geringe Wärmeleitfähigkeit auszeichnen. Gleichzeitig sollen entsprechende gedämmte Rohre zugänglich sein, die eine hohe Druckfestigkeit aufweisen. Ebenso soll ein schnelles Verfahren bereitgestellt werden, mit dem in kurzer Zeit qualitativ hochwertige, gedämmte Rohre hergestellt werden können. Bei diesem Verfahren soll es möglich sein, die Druckverhältnisse im Ringspalt während des Einfüllens des Polyurethansystems beeinflussen zu können.

Diese Aufgaben werden erfindungsgemäß gelöst durch ein Verfahren zur Herstellung von gedämmten Rohren, gemäß Anspruch 1.

Das erfindungsgemäße Verfahren wird in einer bevorzugten Ausführungsform diskontinuierlich durchgeführt.

Die vorliegende Erfindung betrifft daher bevorzugt das erfindungsgemäße Verfahren, wobei es diskontinuierlich durchgeführt wird.

Die einzelnen Schritte des erfindungsgemäßen Verfahrens werden im Folgenden detailliert erläutert:

### Schritt (A):

Schritt (A) des erfindungsgemäßen Verfahrens umfasst das Bereitstellen von Mediumrohr und Mantelrohr, wobei das Mediumrohr innerhalb des Mantelrohres angeordnet ist und zwischen Mediumrohr und Mantelrohr ein Ringspalt mit Enden E1 und E2 ausgebildet wird.

Das Mediumrohr, welches einen geringeren Durchmesser aufweist als das Mantelrohr ist so innerhalb des Mantelrohres angeordnet, dass sich zwischen Mediumrohr und Mantelrohr ein Ringspalt ausbildet. In diesen Ringspalt wird in dem erfindungsgemäßen Schritt (B) das Polyurethansystem eingefüllt.

Bei dem erfindungsgemäß eingesetzten Mediumrohr handelt es sich im Allgemeinen um ein Stahlrohr mit einem Außendurchmesser von beispielsweise 1 bis 120 cm, bevorzugt 4 bis 110 cm. Die Länge des Mediumrohres beträgt beispielsweise 1 bis 24 Meter, bevorzugt 6 bis 16 Meter. In einer bevorzugten Ausführungsform des erfindungsgemäßen Verfahrens wird als Mantelrohr ein Wickelfalzblech eingesetzt.

Das erfindungsgemäß eingesetzte Mantelrohr kann im Allgemeinen jedes dem Fachmann für geeignet erscheinende Material enthalten, beispielsweise auf Basis eines thermoplastischen Kunststoffs, bevorzugt Polyethylen.

Die vorliegende Erfindung betrifft daher bevorzugt das erfindungsgemäße Verfahren, wobei als Mantelrohr ein Rohr auf der Basis von thermoplastischem Kunststoff eingesetzt wird.

Das Mantelrohr weist im Allgemeinen eine Dicke von 1 bis 30 mm auf. Der Innendurchmesser des Mantelrohrs beträgt im Allgemeinen 6 bis 140 cm, bevorzugt 10 bis 120 cm. Die Länge des Mantelrohres beträgt beispielsweise 1 bis 24 Meter, bevorzugt 6 bis 16 Meter.

Das Mantelrohr kann gegebenenfalls aus mehreren Schichten bestehen, die beim Extrusionsvorgang zur Herstellung des Mantelrohres zusammengeführt werden können. Ein Beispiel hierfür ist das Einbringen von mehrlagigen Folien zwischen Polyurethan-Schaumstoff und Mantelrohr, wobei die Folie zur Verbesserung der Sperrwirkung bevorzugt mindestens eine metallische Lage enthält. Geeignete Mantelrohre dieses Typs sind in EP-A-960 723 beschrieben.

In einer besonders bevorzugten Ausführungsform handelt es sich bei dem erfindungsgemäß hergestellten gedämmten Rohr um ein gedämmtes Verbundmantelrohr für erdverlegte Fernwärmenetze, welches die Anforderungen von DIN EN 253:2009 erfüllt.

Das Doppelrohr aus Mediumrohr und Mantelrohr wird in Schritt (A) des erfindungsgemäßen Verfahrens bevorzugt auf einem neigbaren Schäumtisch bereitgestellt, so dass es in einem Winkel von 0° bis 10°, bevorzugt 0° bis 7°, geneigt werden kann.

Erfindungsgemäß erfolgt das Einfüllen des Polyurethansystems am Ende E1 des Rohres jeweils in den dort befindlichen Ringspalt zwischen Mediumrohr und Mantelrohr.

In Schritt (A) des erfindungsgemäßen Verfahrens werden an das Doppelrohr aus Mantelrohr und Mediumrohr bevorzugt alle weiteren Einrichtungen, beispielsweise zum Einfüllen des Polyurethansystems, zum Temperieren etc. angebracht. Diese Einrichtungen sind dem Fachmann an sich bekannt.

In Schritt (A) des erfindungsgemäßen Verfahrens werden ein Mediumrohr und ein Mantelrohr so bereitgestellt, dass ein Ringspalt mit Enden E1 und E2 ausgebildet wird. Die Enden E1 und E2 sind daher im Allgemeinen ringförmig.

Da das Befüllen erfindungsgemäß bevorzugt erfolgt, während das Rohr bestehend aus Mediumrohr und Mantelrohr geneigt ist, liegt diese Neigung bevorzugt so vor, dass sich das Ende E1 an der Seite des Rohres befindet, welches bezüglich E2 höher angeordnet ist. Demgemäß befindet sich das Ende E2 an der Seite des Rohres, welches relativ zu E1 bevorzugt niedriger angeordnet ist.

Erfindungsgemäß wird der Ringspalt am Ende E2 mit einer Kappe verschlossen, wobei diese Kappe in der Größe verstellbare Öffnungen aufweist.

Im Allgemeinen kann die Kappe, mit der der Ringspalt am Ende E2 verschlossen wird, mit allen dem Fachmann bekannten Arten von verstellbaren Öffnungen ausgeführt sein.

In einer bevorzugten Ausführungsform ist die am Ende E2 befindliche Kappe derart ausgeführt, dass die Größe, d. h. die Fläche, der vorliegenden Öffnungen, bevorzugt von außen, verstellt werden kann. Das Verstellen kann entweder manuell oder mit entsprechenden, dem Fachmann bekannten Vorrichtungen, d. h. Motoren, Getrieben, etc. erfolgen.

Die am Ende E2 vorliegende Kappe weist im Allgemeinen genügend Öffnungen in entsprechender Größe, d. h. mit entsprechender Fläche, auf, so dass ein Entlüften des Ringspaltes während des Einfüllens des Polyurethansystems gemäß Schritt (B) möglich ist. Beispielsweise liegen 1 bis 16 Öffnungen, bevorzugt 4 bis 10 Öffnungen, beispielsweise 8 Öffnungen, vor. Die vorliegenden Öffnungen können dabei jede dem Fachmann für geeignet erscheinende Form aufweisen, beispielsweise quadratisch, rechteckig, oval, rund, bevorzugt liegen runde Öffnungen vor. Die Größe, d. h. die Fläche, der einzelnen Öffnungen kann erfindungsgemäß im Allgemeinen gleich oder unterschiedlich sein, bevorzugt liegen Öffnungen mit jeweils gleich großer Fläche vor.

Die Gesamtfläche aller in der Kappe, die am Ende E2 angebracht ist, vorliegenden Öffnungen ist erfindungsgemäß von den Durchmessern von Medium- und Mantelrohr abhängig und bevorzugt maximal groß. Die Gesamtfläche beträgt erfindungsgemäß beispielsweise 1 bis 10.000 cm², bevorzugt 2 bis 5000, 2 bis 500, besonders bevorzugt 4 bis 100 cm². Die Fläche einer in der Kappe, die am Ende E2 angebracht ist, vorliegenden Öffnung beträgt erfindungsgemäß beispielsweise 0,1 bis 1000 cm², bevorzugt 0,5 bis 100 cm², besonders bevorzugt 0,5 bis 5 cm². In dem erfindungsgemäßen Verfahren wird die Größe der Öffnungen mit einer in der Kappe angebrachten drehbaren Scheibe verändert. Dabei ist es weiterhin bevorzugt, dass sich diese drehbare Scheibe von innen über die in der Kappe vorliegenden Öffnungen schiebt, so dass die Größe der Öffnungen durch das Überlappen der Scheibe veränderbar ist.

Ende E1 kann gemäß dem erfindungsgemäßen Verfahren entsprechend ausgeführt sein, beispielsweise, um sicherstellen zu können, dass ein vorteilhaftes Einfüllen des Polyurethansystems möglich ist. In einer bevorzugten Ausführungsform ist Ende E1 ebenfalls mit einer Kappe, besonders bevorzugt mit einer Kappe mit in der Größe verstellbaren Öffnungen, verschlossen.

Die vorliegende Erfindung betrifft daher bevorzugt das erfindungsgemäße Verfahren, wobei auch Ende E1 mit einer Kappe mit in der Größe verstellbaren Öffnungen verschlossen ist.

Am Ende E1 ist erfindungsgemäß bevorzugt zusätzlich eine Vorrichtung für das Einfüllen des Polyurethansystems vorhanden.

### Schritt (B):

Schritt (B) des erfindungsgemäßen Verfahrens umfasst das Einfüllen eines Polyurethansystems umfassend mindestens eine Isocyanatkomponente (a) und mindestens eine Polyolmischung (b) am Ende E1 in den Ringspalt.

Das Einfüllen des Polyurethansystems gemäß Schritt (B) in den Ringspalt zwischen Mediumrohr und Mantelrohr erfolgt beispielsweise mittels einer dem Fachmann bekannten Polyurethandosiermaschine.

Das flüssige Reaktionsgemisch, d. h. das erfindungsgemäße Polyurethansystem, fließt während und nach dem Einfüllen in noch flüssiger Form im Ringspalt hinunter, bis die Polymerisationsreaktion mit Schaumbildung einsetzt. Ab diesem Zeitpunkt findet die weitere Verteilung durch Fließen des langsam in der Viskosität ansteigenden Schaums statt, bis das Material ausreagiert ist.

In dem erfindungsgemäßen Verfahren wird die Größe der Öffnungen in der Kappe während des Einfüllens gemäß Schritt (B) kontinuierlich verändert. Dabei ist es erfindungsgemäß weiter bevorzugt, dass zu Beginn des Einfüllens gemäß Schritt (B) die Öffnungen ihre maximale Größe aufweisen, d. h. es liegt keine Verdeckung der Öffnungen vor. Während des Einfüllens, d. h. mit steigendem Füllgrad in dem Ringspalt, werden die Öffnungen bevorzugt kontinuierlich geschlossen.

In einer bevorzugten Ausführungsform des erfindungsgemäßen Verfahrens, in der auch das Ende E1 mit einer Kappe mit in der Größe verstellbaren Öffnungen verschlossen ist, sind die Öffnungen der Kappe am Ende E1 während des Einfüllens gemäß Schritt (B) verschlossen. In einer bevorzugten Ausführungsform werden die Öffnungen an der Kappe am Ende E1 während Schritt (B) des erfindungsgemäßen Verfahrens genauso gesteuert wie die Öffnungen der Kappe am Ende E2.

Im Allgemeinen kann in Schritt (B) des erfindungsgemäßen Verfahrens jedes dem Fachmann als geeignet erscheinende Polyurethansystem eingesetzt werden. bevorzugt eingesetzte Polyurethansysteme werden im Folgenden detailliert erläutert.

Als Isocyanatkomponente (a) kommen die üblichen aliphatischen, cycloaliphatischen und insbesondere aromatischen Di- und/oder Polyisocyanate zum Einsatz. Bevorzugt verwendet werden Toluylendiisocyanat (TDI), Diphenylmethandiisocyanat (MDI) und insbesondere Gemische aus Diphenylmethandiisocyanat und Polyphenylenpolymethylenpolyisocyanaten (Roh-MDI). Die Isocyanate können auch modifiziert sein, beispielsweise durch Einbau von Uretdion-, Carbamat-, Isocyanurat-, Carbodiimid-, Allophanat- und insbesondere Urethangruppen.

Die Isocyanatkomponente (a) kann auch in Form von Polyisocyanatprepolymeren eingesetzt werden. Diese Prepolymere sind aus dem Stand der Technik bekannt. Die Herstellung erfolgt auf an sich bekannte Weise, indem vorstehend beschriebene Polyisocyanate (a), beispielsweise bei Temperaturen von etwa 80 °C, mit Verbindungen mit gegenüber Isocyanaten reaktiven Wasserstoffatomen, bevorzugt mit Polyolen, zu Polyisocyanatprepolymeren umgesetzt werden. Das Polyol-Polyisocyanat-Verhältnis wird im Allgemeinen so gewählt, dass der NCO-Gehalt des Prepolymeren 8 bis 25 Gew.-%, vorzugsweise 10 bis 22 Gew.-%, besonders bevorzugt 13 bis 20 Gew.-% beträgt.

Erfindungsgemäß besonders bevorzugt wird als Isocyanatkomponente Roh-MDI eingesetzt.

In einer bevorzugten Ausführungsform wird die Isocyanatkomponente (a) so gewählt, dass sie eine Viskosität von weniger als 800 mPas, bevorzugt von 100 bis 650, besonders bevorzugt von 120 bis 400, insbesondere von 180 bis 350 mPas, gemessen nach DIN 53019 bei 20 °C, aufweist.

Im Rahmen dieser Erfindung ist es bevorzugt, dass die erfindungsgemäßen Polyurethansysteme und Polyurethanschaumstoffe im Wesentlichen frei von Isocyanuratgruppen sind. Bevorzugt beträgt im Schaumstoff das Verhältnis Isocyanuratgruppe zu Urethangruppe kleiner als 1:10, besonders bevorzugt kleiner als 1:100. Insbesondere sind im erfindungsgemäß eingesetzten Polyurethan-Schaumstoff im Wesentlichen keine Isocyanuratgruppen vorhanden.

Im erfindungsgemäß eingesetzten Polyurethansystem enthält die Polyolmischung (b) im Allgemeinen Polyole als Bestandteil (b1), und gegebenenfalls chemische Treibmittel als Bestandteil (b2). Im Allgemeinen enthält die Polyolmischung (b) physikalische Treibmittel (b3).

Die Viskosität der erfindungsgemäß eingesetzten Polyolmischung (b) (jedoch ohne physikalische Treibmittel (b3)) beträgt im Allgemeinen 200 bis 10000 mPas, bevorzugt 500 bis 9500 mPas, besonders bevorzugt 1000 bis 9000 mPas, ganz besonders bevorzugt 2500 bis 8500 mPas, insbesondere 3100 bis 8000 mPas, jeweils gemessen nach DIN 53019 bei 20 °C. In einer besonders bevorzugten Ausführungsform wird in dem erfindungsgemäßen Verfahren eine Polyolmischung (b) (jedoch ohne physikalische Treibmittel (b3)) eingesetzt, die eine Viskosität von mehr als 3000 mPas, beispielsweise 3100 bis 8000 mPas, jeweils gemessen nach DIN 53019 bei 20 °C, aufweist.

Die vorliegende Erfindung betrifft daher bevorzugt das erfindungsgemäße Verfahren, wobei eine Polyolmischung (b) (jedoch ohne physikalische Treibmittel (b3)) eingesetzt wird, die eine Viskosität von mehr als 3000 mPas, beispielsweise 3100 bis 8000 mPas, jeweils gemessen nach DIN 53019 bei 20 °C, aufweist.

Die Polyolmischung (b) enthält im Allgemeinen physikalische Treibmittel (b3). Die Zugabe von physikalischen Treibmitteln führt jedoch zu einer signifikanten Absenkung der Viskosität. Daher ist es ein wesentlicher Punkt der Erfindung, dass die oben gemachten Angaben zur Viskosität der Polyolmischung (b), auch für den Fall, dass sie physikalische Treibmittel enthält, sich auf die Viskosität der Polyolmischung (b) ohne Zusatz von physikalischen Treibmitteln (b3) beziehen.

Als Polyole (Bestandteil b1) kommen im Allgemeinen Verbindungen mit mindestens zwei gegenüber Isocyanat reaktiven Gruppen, das heißt mit mindestens zwei mit Isocyanatgruppen reaktiven Wasserstoffatomen, in Betracht. Beispiele hierfür sind Verbindungen mit OH-Gruppen, SH-Gruppen, NH-Gruppen und/oder NH₂-Gruppen.

Als Polyole (Bestandteil b1) kommen bevorzugt Verbindungen auf Basis von Polyesterolen oder Polyetherolen zum Einsatz. Die Funktionalität der Polyetherole und/oder Polyesterole beträgt im Allgemeinen 1,9 bis 8, bevorzugt 2,4 bis 7, besonders bevorzugt 2,9 bis 6.

Die Polyole (b1) weisen eine Hydroxylzahl von im Allgemeinen größer als 100 mg KOH/g, bevorzugt größer als 150 mg KOH/g, besonders bevorzugt größer als 200 mg KOH/g auf. Als Obergrenze der Hydroxylzahl hat sich im Allgemeinen 1000 mg KOH/g, bevorzugt 800 mg KOH/g, besonders 700 mg KOH/g ganz besonders 600 KOH/g bewährt. Die oben angegebenen OH-Zahlen beziehen sich auf die Gesamtheit der Polyole (b1), was nicht ausschließt, dass einzelne Bestandteile der Mischung höhere oder niedrigere Werte aufweisen.

Bevorzugt enthält Komponente (b1) Polyetherpolyole, die nach bekannten Verfahren, beispielsweise durch anionische Polymerisation mit Alkalihydroxiden, wie Natrium- oder Kaliumhydroxid oder Alkalialkoholaten, wie Natriummethylat, Natrium- oder Kaliumethylat oder Kaliumisopropylat als Katalysatoren und unter Zusatz mindestens eines Startermoleküls, das 2 bis 8, vorzugsweise 3 bis 8 reaktive Wasserstoffatome gebunden enthält, oder durch kationische Polymerisation mit Lewis-Säuren, wie Antimonpentachlorid, Borfluorid-Etherat u.a. oder Bleicherde als Katalysatoren aus einem oder mehreren Alkylenoxiden mit 2 bis 4 Kohlenstoffatomen im Alkylenrest hergestellt werden.

Geeignete Alkylenoxide sind beispielsweise Tetrahydrofuran, 1,3-Propylenoxid, 1,2-bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden.

Als Startermoleküle kommen Alkohole in Betracht, wie beispielsweise Glycerin, Trimethylolpropan (TMP), Pentaerythrit, Saccharose, Sorbit, sowie Amine, wie beispielsweise Methylamin, Ethylamin, Isopropylamin, Butylamin, Benzylamin, Anilin, Toluidin, Toluoldiamin, Naphtylamin, Ethylendiamin (EDA), Diethylentriamin, 4,4'-Methylendianilin, 1,3,-Propandiamin, 1,6-Hexandiamin, Ethanolamin, Diethanolamin, Triethanolamin und ähnliche.

Weiterhin können als Startermoleküle Kondensationsprodukte aus Formaldehyd, Phenol und Diethanolamin bzw. Ethanolamin, Formaldehyd, Alkylphenolen und Diethanolamin bzw. Ethanolamin, Formaldehyd, Bisphenol A und Diethanolamin bzw. Ethanolamin, Formaldehyd, Anilin und Diethanolamin bzw. Ethanolamin, Formaldehyd, Kresol und Diethanolamin bzw. Ethanolamin, Formaldehyd, Toluidin und Diethanolamin bzw. Ethanolamin sowie Formaldehyd, Toluoldiamin (TDA) und Diethanolamin bzw. Ethanolamin und ähnliche verwendet werden.

Bevorzugt werden als Startermolekül Glycerin, Saccharose, Sorbit und EDA verwendet.

Die Polyolmischung kann ferner optional als Bestandteil (b2) chemische Treibmittel enthalten. Als chemische Treibmittel sind Wasser oder Carbonsäuren, insbesondere Ameisensäure als chemisches Treibmittel bevorzugt. Das chemische Treibmittel wird im Allgemeinen in einer Menge von 0,1 bis 5 Gew.-%, insbesondere von 1,0 bis 3,0 Gew.-%, bezogen auf das Gewicht der Komponente (b), eingesetzt.

Wie vorstehend erwähnt, enthält die Polyolmischung (b) im Allgemeinen ein physikalisches Treibmittel (b3). Darunter versteht man Verbindungen, die in den Einsatzstoffen der Polyurethan-Herstellung gelöst oder emulgiert sind und unter den Bedingungen der Polyurethanbildung verdampfen. Dabei handelt es sich beispielsweise um Kohlenwasserstoffe, beispielsweise Cyclopentan, halogenierte Kohlenwasserstoffe, und andere Verbindungen, wie zum Beispiel perfluorierte Alkane, wie Perfluorhexan, Fluorchlorkohlenwasserstoffe, sowie Ether, Ester, Ketone und/oder Acetale. Diese werden üblicherweise in einer Menge von 1 bis 30 Gew.-%, bevorzugt 2 bis 25 Gew.-%, besonders bevorzugt 3 bis 20 Gew.-%, bezogen auf das Gesamtgewicht der Komponenten (b) eingesetzt.

Die vorliegende Erfindung betrifft daher bevorzugt das erfindungsgemäße Verfahren, wobei das Polyurethansystem mit Cyclopentan als physikalischem Treibmittel verschäumt wird.

In einer bevorzugten Ausführungsform enthält die Polyolmischung (b) als Bestandteil (b4) Vernetzer. Unter Vernetzer werden Verbindungen verstanden, die ein Molekulargewicht von 60 bis weniger als 400 g/mol aufweisen und mindestens 3 gegenüber Isocyanaten reaktive Wasserstoffatome aufweisen. Ein Beispiel hierfür ist Glycerin.

Die Vernetzer (b4) werden im Allgemeinen in einer Menge von 1 bis 10 Gew.-%, bevorzugt von 2 bis 6 Gew.-%, bezogen auf das Gesamtgewicht der Polyolmischung (b) (jedoch ohne physikalische Treibmittel (b3)), eingesetzt.

In einer weiteren bevorzugten Ausführungsform enthält die Polyolmischung (b) als Bestandteil (b5) Kettenverlängerungsmittel, die der Erhöhung der Vernetzungsdichte dienen. Unter Kettenverlängerungsmittel werden Verbindungen verstanden, die ein Molekulargewicht von 60 bis weniger als 400 g/mol aufweisen und 2 gegenüber Isocyanaten reaktive Wasserstoffatome aufweisen. Beispiele hierfür sind Butandiol, Diethylenglykol, Dipropylenglykol sowie Ethylenglykol.

Die Kettenverlängerungsmittel (b5) werden im Allgemeinen in einer Menge von 2 bis 20 Gew.-%, bevorzugt von 4 bis 15 Gew.-%, bezogen auf das Gesamtgewicht der Polyolmischung (b) (jedoch ohne physikalische Treibmittel (b3)), eingesetzt.

Die Komponenten (b4) und (b5) können in der Polyolmischung einzeln oder in Kombination eingesetzt werden.

Durch Umsetzung des erfindungsgemäßen Polyurethansystems sind die erfindungsgemäß als Dämmmaterial vorliegenden Polyurethanschaumstoffe erhältlich.

Bei der Umsetzung werden die Polyisocyanate (a) und die Polyolmischung (b) im Allgemeinen in solchen Mengen zur Umsetzung gebracht, dass die Isocyanat-Kennzahl des Schaums 90 bis 240, bevorzugt 90 bis 200, besonders bevorzugt 95 bis 180, ganz besonders bevorzugt 95 bis 160, insbesondere 100 bis 149, beträgt.

In einer bevorzugten Ausführungsform werden die Komponenten (a) und (b) des Polyurethansystems so gewählt werden, dass der resultierende Schaumstoff eine Druckfestigkeit (gemäß EN 253, bei Rohdichte 60 kg/m³) von größer 0,3 N/mm², bevorzugt größer 0,35 N/mm², besonders bevorzugt grösser 0,4 N/mm², gemessen nach DIN 53421, aufweist.

Im Allgemeinen beträgt in dem erfindungsgemäßen Verfahren die Gesamteinschussrohdichte weniger als 80 kg/m³, bevorzugt weniger als 75 kg/m³, besonders bevorzugt weniger als 70 kg/m³, ganz besonders bevorzugt weniger als 65 kg/m³, insbesondere weniger als 60 kg/m³. Unter Gesamteinschussrohdichte wird im Allgemeinen die Gesamtmenge an eingefülltem flüssigem Polyurethan-Material bezogen auf das Gesamtvolumen des ausgeschäumten Ringspaltes verstanden.

Das erfindungsgemäße Verfahren kann im Allgemeinen bei jeder dem Fachmann als geeignet erscheinenden Verdichtung erfolgen. Unter Verdichtung versteht man den Quotienten aus der Gesamtfülldichte des Rohrspaltes dividiert durch die freigeschäumte Kernrohdichte bestimmt an einem unverdichteten Schaumkörper.

Bevorzugt betrifft die vorliegende Erfindung das erfindungsgemäße Verfahren, wobei die Umsetzung bei einer Verdichtung von kleiner 4,0, bevorzugt kleiner 3,5, besonders bevorzugt kleiner 3,0 und ganz besonders bevorzugt kleiner 2,5 durchgeführt wird.

Das in Schritt (B) des erfindungsgemäßen Verfahrens eingesetzte Polyurethansystem enthält bevorzugt einen Katalysator. Erfindungsgemäß können im Allgemeinen alle dem Fachmann als geeignet erscheinenden Katalysatoren eingesetzt werden.

Erfindungsgemäß bevorzugt eingesetzte Katalysatoren katalysieren die Treibreaktion, d. h. die Reaktion von Diisocyanat mit Wasser. Diese Reaktion findet überwiegend vor der eigentlichen Polyurethankettenbildung, d. h. der Polymerisationsreaktion, statt und führt daher zu einem schnellen Reaktionsprofil des Polyurethansystems.

Beispiele für erfindungsgemäß einsetzbare Katalysatoren sind ausgewählt aus der Gruppe bestehend aus organischen Zinnverbindungen, wie Zinn-(II)-salze von organischen Carbonsäuren, und/oder basischen Aminverbindungen, bevorzugt tertiäre Amine, wie beispielsweise Triethylamin, und/oder 1,4-Diaza-bicyclo-(2,2,2)-octan, Kaliumacetat, Kaliumformiat und/oder Kaliumoctoat, Glycin, N-((2-Hydroxy-5-nonylphenyl)methyl)-N-methyl-mononatrium Salz (CAS-Nummer 56968-08-2), (2-Hydroxypropyl)-trimethylammonium-2-ethylhexanoat (CAS-Nummer 62314-22-1), 1-Propanammonium-2-hydroxy-N,N,N-trimethyl-formiat, Trimethylhydroxypropylammoniumformiat, 2-((2-Dimethylamino)ethyl)-methylamino)-ethanol (CAS-Nummer 2212-32-0) und/oder N,N',N"-Tris(dimethylamino-propyl)hexahydrotriazin (CAS-Nummer 15875-13-5) und Mischungen davon.

Die erfindungsgemäß bevorzugten Katalysatoren können dem Polyurethansystem in jeder dem Fachmann bekannten Art zugegeben werden, beispielsweise in Substanz oder als Lösung, beispielsweise als wässrige Lösung.

Bezogen auf die Polyolkomponente (b) wird erfindungsgemäß mindestens ein Katalysator in einer Menge von 0,01 bis 1,5 Gew.-%, bevorzugt 0,05 bis 1,0 Gew.-%, besonders bevorzugt 0,05 bis 0,5 Gew.-%, ganz besonders bevorzugt 0,1 bis 0,3 Gew.-%, zugegeben.

Dem erfindungsgemäß eingesetzten Polyurethansystem können gegebenenfalls auch noch Zusatzstoffe (b6) zugesetzt werden. Unter Zusatzstoffen (b6) werden die im Stand der Technik bekannten und üblichen Hilfs- und Zusatzstoffe verstanden, jedoch ohne physikalische Treibmittel. Genannt seien beispielsweise oberflächenaktive Substanzen, Schaumstabilisatoren, Zellregler, Füllstoffe, Farbstoffe, Pigmente, Flammschutzmittel, Antistatika, Hydrolyseschutzmittel und/oder fungistatisch und bakteriostatisch wirkende Substanzen. Anzumerken ist, dass die oben angegebenen allgemeinen und bevorzugten Viskositätsbereiche der Komponente (b) sich auf eine Polyolmischung (b) inklusive gegebenenfalls zugesetzter Zusatzstoffe (b6) (aber exklusive gegebenenfalls zugesetztem physikalischem Treibmittel (b3)) beziehen.

Die vorliegende Erfindung betrifft daher bevorzugt das erfindungsgemäße Verfahren, wobei die mindestens eine Polyolmischung (b) Polyole (b1), gegebenenfalls chemische Treibmittel (b2), physikalische Treibmittel (b3), Vernetzer (b4), Kettenverlängerungsmittel (b5) und/oder gegebenenfalls Zusatzstoffe (b6), enthält.

Die vorliegende Erfindung betrifft daher insbesondere das erfindungsgemäße Verfahren, wobei als Zusatzstoff (b6) zwischen 1 und 25 Gew.-% Flammschutzmittel, bezogen auf das Gesamtgewicht der Polyolmischung, eingesetzt wird.

### Schritt (C):

Schritt (C) des erfindungsgemäßen Verfahrens umfasst das Aufschäumen und Aushärtenlassen des Polyurethansystems.

Nach Einfüllen des Polyurethansystems am Ende E1 in den Ringspalt beginnt die Polymerisationsreaktion zur Ausbildung des Polyurethan-Schaumstoffs. Erfindungsgemäß kann diese Polymerisationsreaktion schon beginnen, während weiteres Polyurethansystem eingefüllt wird. In einer bevorzugten Ausführungsform des erfindungsgemäßen Verfahrens beginnt die Polymerisationsreaktion erst, wenn die gesamte Menge Polyurethansystem eingefüllt ist.

Das Aufschäumen und Aushärten erfolgt erfindungsgemäß im Allgemeinen bei einer Komponententemperatur von 18 bis 35 °C, bevorzugt 20 bis 30 °C, besonders bevorzugt 22 bis 28 °C.

Das Aufschäumen und Aushärten erfolgt erfindungsgemäß im Allgemeinen bei Oberflächentemperaturen von 15 bis 50 °C, bevorzugt 20 bis 50 °C, besonders bevorzugt 25 bis 45 °C.

in Schritt (C) des erfindungsgemäßen Verfahrens sind die Öffnungen in der Kappe am Ende E2 bevorzugt geöffnet, so dass Treibmittel und/oder bei der Reaktion entstehende unter den Reaktionsbedingungen gasförmige Stoffe gegebenenfalls entweichen können.

Nach Schritt (C) des erfindungsgemäßen Verfahrens wird ein gedämmtes Rohr erhalten, mindestens umfassend ein Mediumrohr, ein Mantelrohr und eine dämmende Schicht zwischen Mediumrohr und Mantelrohr aus Polyurethan-Schaumstoff.

Die dämmende Schicht weist im Allgemeinen eine Dicke von 1 bis 20 cm, bevorzugt 5 bis 20 cm besonders bevorzugt 7 bis 20 cm, auf.

In einer weiteren bevorzugten Ausführungsform weist die dämmende Schicht enthaltend Polyurethan-Schaumstoff eine Wärmeleitfähigkeit von weniger als 27 mW/mK, bevorzugt von 22 bis 26,7 mW/mK, gemessen nach EN ISO 8497 auf.

Die vorliegende Erfindung betrifft auch die Verwendung einer Kappe mit in der Größe verstellbarer Öffnung zur Herstellung von gedämmten Rohren, gemäß Anspruch 8. Bezüglich der einzelnen Merkmale und den bevorzugten Ausführungsformen gilt für die erfindungsgemäße Verwendung das bezüglich des erfindungsgemäßen Verfahrens Gesagte. Bezüglich der einzelnen Merkmale und den bevorzugten Ausführungsformen gilt für das erfindungsgemäß hergestellte gedämmte Rohr das bezüglich des erfindungsgemäßen Verfahrens Gesagte.

Beispiele für gedämmte Rohre sind beispielsweise Fernwärmerohre oder Verbundmantelrohre gemäß DIN EN 253: 2009.

Das erfindungsgemäß hergestellte gedämmte Rohr ist im Allgemeinen aufgebaut aus (i) einem Mediumrohr, (ii) einer Schicht aus Polyurethan-Schaumstoff und (iii) einem Mantelrohr.

## Patentansprüche

1. Verfahren zur Herstellung von gedämmten Rohren, umfassend die Schritte:
(A) Bereitstellen von Mediumrohr und Mantelrohr, wobei das Mediumrohr innerhalb des Mantelrohres angeordnet ist und zwischen Mediumrohr und Mantelrohr ein Ringspalt mit Enden E1 und E2 ausgebildet wird,
(B) Einfüllen eines Polyurethansystems umfassend mindestens eine Isocyanatkomponente und mindestens eine Polyolmischung an Ende E1 in den Ringspalt und
(C) Aufschäumen und Aushärtenlassen des Polyurethansystems,
wobei der Ringspalt an Ende E2 mit einer Kappe verschlossen ist, wobei diese Kappe in der Größe verstellbare Öffnungen aufweist, **dadurch gekennzeichnet, dass** die Größe der Öffnungen mit einer in der Kappe angebrachten drehbaren Scheibe während des Einfüllens gemäß Schritt B kontinuierlich verändert wird.

2. Verfahren gemäß Anspruch 1, **dadurch gekennzeichnet, dass** die mindestens eine Polyolmischung Polyole, gegebenenfalls chemisch Treibmittel, physikalische Treibmittel, Vernetzer, Kettenverlängerungsmittel und/oder gegebenenfalls Zusatzstoffe, enthält.

3. Verfahren nach Anspruch 1 oder 2, **dadurch gekennzeichnet, dass** auch Ende E1 mit einer Kappe mit in der Größe verstellbaren Öffnungen verschlossen ist.

4. Verfahren nach Anspruch 3, **dadurch gekennzeichnet, dass** die Öffnungen der Kappe an dem Ende E1 während des Einfüllens gemäß Schritt B verschlossen sind.

5. Verfahren nach einem der Ansprüche 1 bis 4, **dadurch gekennzeichnet, dass** als Mantelrohr ein Wickelfalzblech eingesetzt wird.

6. Verfahren gemäß einem der Ansprüche 1 bis 5, **dadurch gekennzeichnet, dass** als Mantelrohr ein Rohr auf der Basis von thermoplastischem Kunststoff eingesetzt wird.

7. Verfahren nach einem der Ansprüche 1 bis 6, **dadurch gekennzeichnet, dass** es diskontinuierlich durchgeführt wird.

8. Verwendung einer Kappe mit in der Größe verstellbaren Öffnungen zur Herstellung von gedämmten Rohren, in einem Verfahren gemäß Anspruch 1.

## Claims

1. A process for producing insulated pipes, which comprises the steps:
(A) provision of pipe for a medium and outer pipe, where the pipe for a medium is arranged within the outer pipe and an annular gap having ends E1 and E2 is formed between the pipe for a medium and outer pipe,
(B) introduction of a polyurethane system comprising at least one isocyanate component and at least one polyol mixture into the annular gap at the end E1 and
(C) foaming and curing of the polyurethane system,
where the annular gap is closed by means of a cap at the end E2 and this cap has openings having an adjustable size, wherein the size of the openings can be altered continuously during the introduction as per step B by means of a rotatable plate installed in the cap.

2. The process according to claim 1, wherein the at least one polyol mixture comprises polyols, optionally chemical blowing agents, physical blowing agents, crosslinkers, chain extenders and/or optionally additives.

3. The process according to claim 1 or 2, wherein end E1 is also closed by a cap which has openings having an adjustable size.

4. The process according to claim 3, wherein the openings in the cap at the end E1 are closed during the introduction as per step B.

5. The process according to any of claims 1 to 4, wherein a folded spiral-seam tube is used as outer pipe.

6. The process according to any of claims 1 to 5, wherein a pipe based on thermoplastic polymer is used as outer pipe.

7. The process according to any of claims 1 to 6 which is carried out batchwise.

8. The use of a cap which has openings having an adjustable size for producing insulated pipes in a process according to claim 1.

## Revendications

1. Procédé de fabrication de tubes isolés, comprenant les étapes suivantes:
(A) préparer un tube à fluide et un tube de gainage, dans lequel le tube à fluide est disposé à l'intérieur du tube de gainage et une fente annulaire avec des extrémités E1 et E2 est formée entre le tube à fluide et le tube de gainage,
(B) introduire un système de polyuréthane comprenant au moins un composant isocyanate et au moins un mélange de polyols à l'extrémité E1 dans la fente annulaire, et
(C) expanser et laisser durcir le système de polyuréthane,
dans lequel la fente annulaire est fermée à l'extrémité E2 par un capuchon, dans lequel ce capuchon présente des ouvertures de grandeur réglable, **caractérisé en ce que** l'on fait varier de façon continue la grandeur des ouvertures avec un disque tournant installé dans le capuchon pendant le remplissage selon l'étape B.

2. Procédé selon la revendication 1, **caractérisé en ce que** ledit au moins un mélange de polyols contient des polyols, éventuellement des agents moussants chimiques, des agents moussants physiques, des agents de réticulation, des agents d'allongement de chaîne et/ou éventuellement des substances d'addition.

3. Procédé selon une revendication 1 ou 2, **caractérisé en ce que** l'extrémité E1 est également fermée par un capuchon avec des ouvertures de grandeur réglable.

4. Procédé selon la revendication 3, **caractérisé en ce que** les ouvertures du capuchon à l'extrémité E1 sont fermées pendant le remplissage selon l'étape B.

5. Procédé selon l'une quelconque des revendications 1 à 4, **caractérisé en ce que** l'on utilise comme tube de gainage une tôle à pliage roulé.

6. Procédé selon l'une quelconque des revendications 1 à 5, **caractérisé en ce que** l'on utilise comme tube de gainage un tube à base de matière plastique thermoplastique.

7. Procédé selon l'une quelconque des revendications 1 à 6, **caractérisé en ce qu'**on le met en oeuvre de façon discontinue.

8. Utilisation d'un capuchon avec des ouvertures de grandeur réglable pour la fabrication de tubes isolés, dans un procédé selon la revendication 1.
